# EUROPEAN PATENT APPLICATION

(11) **EP 4 755 219 A1**
(43) Date of publication of application: **10.06.2026**
(21) Application number: 24849515.2
(22) Date of filing: 26.07.2024
(51) Int. Cl.: A24F 40/46, A24F 40/40, A24F 40/90, H01M 10/04, H01M 6/04

(54) **AEROSOL GENERATION DEVICE**

(30) Priority: 01.08.2023 KR 20230100645
(71) Applicant: KT&G Corporation, Daedeok-gu Daejeon 34337 (KR)
(72) Inventor: LEE, Won Kyeong, Guri-si, Gyeonggi-do 11920 (KR); PARK, Sang Kyu, Seoul 05281 (KR); AHN, Hyun Ho, Seoul 04773 (KR); OH, Jun Yeop, Seoul 02559 (KR); JEONG, Jong Seong, Sejong 30126 (KR)
(74) Representative: AWA Sweden AB
(86) International application number: PCT/KR2024/010942
(87) International publication number: WO 2025/028946

(57) **Abstract**

An aerosol-generating device according to an embodiment includes a heater configured to heat an aerosol-generating article to generate an aerosol and a first battery configured to supply power to the heater, wherein the first battery includes an aqueous electrolyte.

## Description

### Technical Field

Embodiments relate to an aerosol-generating device, and, more specifically, to an aerosol-generating device with an improved battery lifespan.

### Background Art

Recently, the demand for alternative methods to overcome the disadvantages of traditional cigarettes has increased. For example, there is a growing demand for systems that generate aerosols by heating cigarettes or aerosol-generating materials using an aerosol-generating device, rather than by burning cigarettes to generate the aerosol. Accordingly, researches on a heating-type aerosol generating device have been actively conducted.

A heating-type aerosol-generating device may include a heater for heating an aerosol-generating article and a battery for supplying power to the heater. Because aerosol-generating devices are required to be portable, there are limitations on the size and capacity of a battery, and thus, repetitive charging of the battery is required.

### Disclosure of Invention

### Technical Problem

Frequent charging and discharging of a battery, which are required during the use of an aerosol-generating device, may shorten the battery's lifespan. In addition, because there is a risk of external impacts, such as dropping of the aerosol-generating device while a user is carrying the aerosol-generating device, the battery's stability needs to be ensured.

Problems to be solved by the embodiments are not limited to the problems described above, and other problems that are not mentioned will be clearly understood by those of ordinary skill in the art from the present specification and the accompanying drawings.

### Solution to Problem

An aerosol-generating device according to an embodiment includes a heater configured to heat an aerosol-generating article to generate an aerosol, and a first battery configured to supply power to the heater, wherein the first battery includes an aqueous electrolyte.

### Advantageous Effects of Invention

An aerosol-generating device according to an embodiment may have fast charge and discharge rates, improved service lifespan, and high stability by including a battery including an aqueous electrolyte.

The effects of the embodiments are not limited to those described above, and may include all effects that can be inferred from the configuration described below.

### Brief Description of Drawings

FIGS. 1 to 4 are diagrams illustrating examples in which an aerosol-generating article is inserted into an aerosol-generating device.
FIG. 5 is a configuration diagram illustrating an example of a first battery.
FIG. 6 is a configuration diagram illustrating a holder of an aerosol-generating device according to an embodiment.
FIGS. 7 and 8 are diagrams illustrating an example of a holder from various aspects.
FIG. 9 is a configuration diagram illustrating a cradle of an aerosol-generating device according to an embodiment.
FIGS. 10 and 11 are diagrams illustrating an example of a cradle from various aspects.
FIG. 12 is a configuration diagram illustrating an example in which a holder is inserted into a cradle.
FIG. 13 is a diagram illustrating an example in which a holder is inserted into a cradle.
FIGS. 14 to 16 are diagrams illustrating examples of an aerosol-generating article.
FIG. 17 is a block diagram of an aerosol-generating device according to another embodiment.

### Best Mode for Carrying out the Invention

An aerosol-generating device according to an embodiment includes a heater configured to heat an aerosol-generating article to generate an aerosol, and a first battery configured to supply power to the heater, wherein the first battery includes an aqueous electrolyte.

The aerosol-generating device may further include a holder including the heater and the first battery, and a cradle including an internal space in which the holder is accommodated, and including a second battery configured to charge the first battery by supplying power to the first battery.

The second battery is a lithium ion battery.

The aqueous electrolyte may include one or more multivalent metal ions selected from the group consisting of Mg²⁺, Ca²⁺, Zn²⁺, and Al³⁺.

The aqueous electrolyte may include one or more metal salts selected from the group consisting of ZnSO₄, Zn(CF₃SO₃)₂, Zn(NO₃)₂, Zn(ClO₄)₂, ZnCl₂, Zn(CH₃COO)₂, Zn(TFSI)₂, Zn(BF₄)₂·xH₂O, and Zn(N(CF₃SO₂)₂)₂ (Zn(TFSI)₂).

The aqueous electrolyte may include a metal salt, and a concentration of the metal salt in the aqueous electrolyte may be 1 M or more.

The aqueous electrolyte may include one or more additives selected from the group consisting of zinc triflate, Na₂SO₄, polyacrylamide (PAM), diethyl ether (Et₂O), and dimethyl sulfoxide (DMSO).

The first battery may include a cathode including one or more transition metals selected from manganese and vanadium as a cathode active material and an anode including zinc as an anode active material.

The aqueous electrolyte may include a cathode electrolyte and an anode electrolyte, the first battery may include a cathode, an anode, and a separator membrane arranged between the cathode and the anode, the cathode electrolyte may circulate from a cathode electrolyte tank that accommodates the cathode electrolyte, via the cathode, back to the cathode electrolyte tank, and the anode electrolyte may circulate from an anode electrolyte tank that accommodates the anode electrolyte, via the anode, back to the anode electrolyte tank.

The cathode electrolyte may include bromine, and the anode electrolyte may include zinc.

The first battery may further include a cathode pump configured to circulate the cathode electrolyte from the cathode electrolyte tank, via the cathode, back to the cathode electrolyte tank, and an anode pump configured to circulate the anode electrolyte from the anode electrolyte tank, via the anode, back to the anode electrolyte tank.

### Mode for the Invention

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

In addition, while such terms as "first" or "second" may be used to describe various components, such components must not be limited to the above terms. The above terms are used only to distinguish one component from another.

Throughout the specification, the term "aerosol-generating device" may be a device that generates aerosols by using an aerosol-generating material to generate aerosols that may be directly inhaled into a user's lungs through the user's mouth.

Throughout the specification, the term "aerosol-generating article" refers to an articled used for smoking. For example, the aerosol-generating article may be a combustion-type cigarette that is used via ignition and combustion, or may be a heating-type cigarette that is used by being heated by an aerosol-generating device.

Throughout the specification, the terms "upstream" and "downstream" may be determined based on a direction of airflow when a user inhales aerosols by using an aerosol-generating article. Those of ordinary skill in the art would easily understand that the terms "upstream" and "downstream" are relative depending on the relationship between components.

Throughout the specification, the term "puff" refers to a user's inhalation. The inhalation may refer to a situation in which aerosols are drawn into the user's oral cavity, nasal cavity, or lungs via the user's mouth or nose.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, an aerosol-generating device according to an embodiment is described with reference to the drawings.

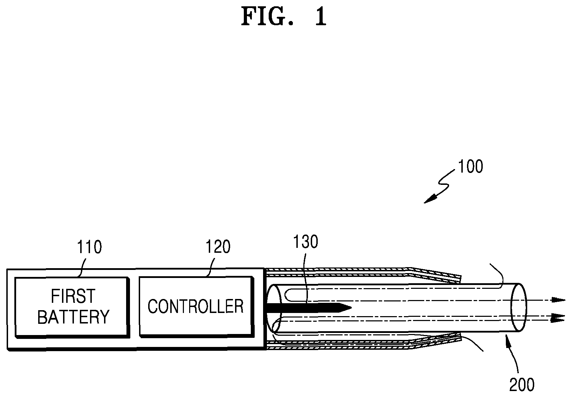

FIGS. 1 through 3 are diagrams showing examples in which an aerosol generating article is inserted into an aerosol generating device.

Referring to FIG. 1, the aerosol generating device 100 may include a first battery 110, a controller 120, and a heater 130.

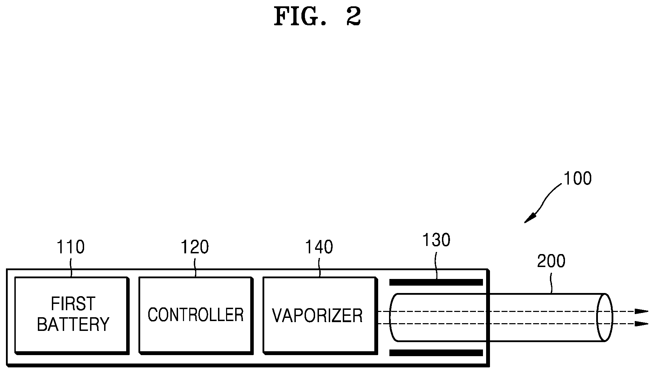

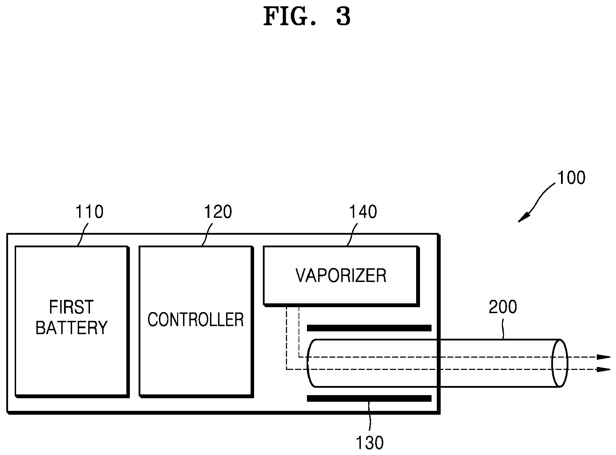

Referring to FIGS. 2 and 3, the aerosol generating device 100 may further include a vaporizer 140. Also, the aerosol generating article 200 may be inserted into an inner space of the aerosol generating device 100.

FIGS. 1 through 3 illustrate components of the aerosol generating device 100, which are related to the present embodiment. Therefore, it will be understood by one of ordinary skill in the art related to the present embodiment that other general-purpose components may be further included in the aerosol generating device 100, in addition to the components illustrated in FIGS. 1 through 3.

Also, FIGS. 2 and 3 illustrate that the aerosol generating device 100 includes the heater 130. However, as necessary, the heater 130 may be omitted.

FIG. 1 illustrates that the first battery 110, the controller 120, and the heater 130 are arranged in series. Also, FIG. 2 illustrates that the first battery 110, the controller 120, the vaporizer 140, and the heater 130 are arranged in series. Also, FIG. 3 illustrates that the vaporizer 140 and the heater 130 are arranged in parallel. However, the internal structure of the aerosol generating device 100 is not limited to the structures illustrated in FIGS. 1 through 3. In other words, according to the design of the aerosol generating device 100, the first battery 110, the controller 120, the heater 130, and the vaporizer 140 may be differently arranged.

When the aerosol generating article 200 is inserted into the aerosol generating device 100, the aerosol generating device 100 may operate the heater 130 and/or the vaporizer 140 to generate aerosol from the aerosol generating article 200 and/or the vaporizer 140. The aerosol generated by the heater 130 and/or the vaporizer 140 is delivered to a user by passing through the aerosol generating article 200.

As necessary, even when the aerosol generating article 200 is not inserted into the aerosol generating device 100, the aerosol generating device 100 may heat the heater 130.

The first battery 110 may supply power to be used for the aerosol generating device 100 to operate. For example, the first battery 110 may supply power to heat the heater 130 or the vaporizer 140, and may supply power for operating the controller 120. Also, the first battery 110 may supply power for operations of a display, a sensor, a motor, etc. mounted in the aerosol generating device 100.

The controller 120 may generally control operations of the aerosol generating device 100. In detail, the controller 120 may control not only operations of the first battery 110, the heater 130, and the vaporizer 140, but also operations of other components included in the aerosol generating device 100. Also, the controller 120 may check a state of each of the components of the aerosol generating device 100 to determine whether or not the aerosol generating device 100 is able to operate.

The controller 120 may include at least one processor. A processor can be implemented as an array of a plurality of logic gates or can be implemented as a combination of a general-purpose microprocessor and a memory in which a program executable in the microprocessor is stored. It will be understood by one of ordinary skill in the art that the processor can be implemented in other forms of hardware.

The heater 130 may be heated by the power supplied from the first battery 110. For example, when the aerosol generating article 200 is inserted into the aerosol generating device 100, the heater 130 may be located outside the aerosol generating article 200. Thus, the heated heater 130 may increase a temperature of an aerosol generating material in the aerosol generating article 200.

The heater 130 may include an electro-resistive heater. For example, the heater 130 may include an electrically conductive track, and the heater 130 may be heated when currents flow through the electrically conductive track. However, the heater 130 is not limited to the example described above and may include all heaters which may be heated to a desired temperature. Here, the desired temperature may be pre-set in the aerosol generating device 100 or may be set by a user.

As another example, the heater 130 may include an induction heater. In detail, the heater 130 may include an electrically conductive coil for heating an aerosol generating article in an induction heating method, and the aerosol generating article may include a susceptor which may be heated by the induction heater.

For example, the heater 130 may include a tube-type heating element, a plate-type heating element, a needle-type heating element, or a rod-type heating element, and may heat the inside or the outside of the aerosol generating article 200, according to the shape of the heating element.

Also, the aerosol generating device 100 may include a plurality of heaters 130. Here, the plurality of heaters 130 may be inserted into the aerosol generating article 200 or may be arranged outside the aerosol generating article 200. Also, some of the plurality of heaters 130 may be inserted into the aerosol generating article 200 and the others may be arranged outside the aerosol generating article 200. In addition, the shape of the heater 130 is not limited to the shapes illustrated in FIGS. 1 through 3 and may include various shapes.

The vaporizer 140 may generate aerosol by heating a liquid composition and the generated aerosol may pass through the aerosol generating article 200 to be delivered to a user. In other words, the aerosol generated via the vaporizer 140 may move along an air flow passage of the aerosol generating device 100 and the air flow passage may be configured such that the aerosol generated via the vaporizer 140 passes through the aerosol generating article 200 to be delivered to the user.

For example, the vaporizer 140 may include a liquid storage, a liquid delivery element, and a heating element, but it is not limited thereto. For example, the liquid storage, the liquid delivery element, and the heating element may be included in the aerosol generating device 100 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the vaporizer 140 or may be formed integrally with the vaporizer 140.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated.

For example, the vaporizer 140 may be referred to as a cartomizer or an atomizer, but it is not limited thereto.

The aerosol generating device 100 may further include general-purpose components in addition to the first battery 110, the controller 120, the heater 130, and the vaporizer 140. For example, the aerosol generating device 100 may include a display capable of outputting visual information and/or a motor for outputting haptic information. Also, the aerosol generating device 100 may include at least one sensor (a puff sensor, a temperature sensor, an aerosol generating article insertion detecting sensor, etc.). Also, the aerosol generating device 100 may be formed as a structure that, even when the aerosol generating article 200 is inserted into the aerosol generating device 100, may introduce external air or discharge internal air.

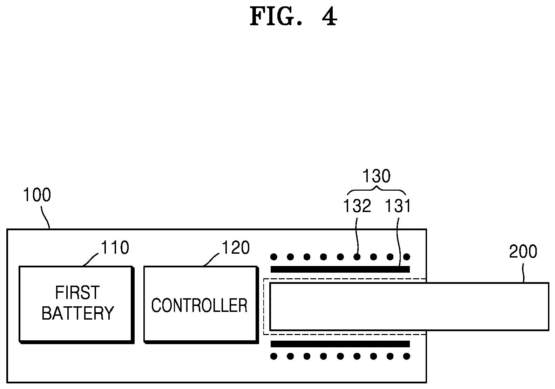

FIG. 4 is a diagram illustrating another example in which an aerosol-generating article is inserted into an aerosol-generating device.

Referring to FIG. 4, the aerosol-generating device 100 may include the first battery 110, the controller 120, and the heater 130, and the heater 130 may include a heating element 131 and an induction coil 132.

The aerosol-generating device 100 may generate an aerosol by heating the aerosol-generating article 200 accommodated in the aerosol-generating device 100 via induction heating. Induction heating refers to a method of generating heat in a magnetic material by applying an alternating magnetic field, whose direction periodically varies, to the magnetic material that generates heat due to an external magnetic field.

When an alternating magnetic field is applied to a magnetic material, energy losses due to eddy current loss and hysteresis loss may occur in the magnetic material, and the lost energy may be released as thermal energy from the magnetic material. The greater the amplitude or frequency of the alternating magnetic field applied to the magnetic material, the more thermal energy may be released from the magnetic material. The aerosol-generating device 100 may release thermal energy from a magnetic material by applying an alternating magnetic field to the magnetic material, and may transmit, to the aerosol-generating article 200, the thermal energy released from the magnetic material.

The magnetic material that generates heat due to an external magnetic field may be a susceptor. The susceptor may be provided in the aerosol-generating device 100 in the form of a piece, flake, or strip. For example, at least a portion of the heating element 131 arranged inside the aerosol-generating device 100 may be formed of a susceptor material.

At least a portion of the susceptor material may be formed of a ferromagnetic substance. For example, the susceptor material may include metal or carbon. The susceptor material may include at least one of ferrite, ferromagnetic alloy, stainless steel, and aluminum (Al). Also, the susceptor material may include at least one of ceramics such as graphite, molybdenum, silicon carbide, niobium, nickel alloy, metal film, or zirconia, transition metals such as nickel (Ni) or cobalt (Co), and metalloids such as boron (B) or phosphorus (P).

The heating element 131 may heat the aerosol-generating article 200 accommodated in the aerosol-generating device 100. As described above, the heating element 131 may heat the aerosol-generating article 200 via induction heating. The heating element 131 may include a susceptor material that generates heat due to an external magnetic field, and the aerosol-generating device 100 may apply an alternating magnetic field to the heating element 131.

The induction coil 132 may be provided in the aerosol-generating device 100. The induction coil 132 may apply an alternating magnetic field to the heating element 131. When power is supplied to the induction coil 132 from the aerosol-generating device 100, a magnetic field may be formed inside the induction coil 132. When an alternating current is applied to the induction coil 132, a direction of the magnetic field formed inside the induction coil 132 may continuously vary. When the heating element 131 is arranged inside the induction coil 132 and exposed to an alternating magnetic field whose direction periodically varies, the heating element 131 may generate heat, and the aerosol-generating article 200 accommodated in a housing space may be heated.

The induction coil 132 may be wound along an outer surface of the heating element 131. In addition, the induction coil 132 may be wound along an inner surface of an external housing of the aerosol-generating device 100. The heating element 131 may be arranged in an internal space formed by winding the induction coil 132. When power is supplied to the induction coil 132, an alternating magnetic field generated by the induction coil 132 may be applied to the heating element 131.

The induction coil 132 may extend in a longitudinal direction of the aerosol-generating device 100. The induction coil 132 may extend to an appropriate length in a longitudinal direction. For example, the induction coil 132 may extend to have a length corresponding to the length of the heating element 131, or may extend to have a greater length than the length of the heating element 131.

The induction coil 132 may be arranged at a position suitable for applying an alternating magnetic field to the heating element 131. For example, the induction coil 132 may be arranged at a position corresponding to the heating element 131. Due to the size and arrangement of the induction coil 132, the efficiency with which the alternating magnetic field of the induction coil 132 is applied to the heating element 131 may be improved.

When the amplitude or frequency of the alternating magnetic field formed by the induction coil 132 varies, the degree to which the heating element 131 heats the aerosol-generating article 200 may also vary. Because the amplitude or frequency of a magnetic field generated by the induction coil 132 may be changed by power applied to the induction coil 132, the aerosol-generating device 100 may control heating of the aerosol-generating article 200 by adjusting the power applied to the induction coil 132. For example, the aerosol-generating device 100 may control the amplitude or frequency of an alternating current applied to the induction coil 132.

As one example, the induction coil 132 may be implemented as a solenoid. The induction coil 132 may be a solenoid wound along the inner surface of the external housing of the aerosol-generating device 100, and the heating element 131 and the aerosol-generating article 200 may be arranged in an internal space of the solenoid. A material of a wire constituting the solenoid may be copper (Cu). However, it is not limited thereto, and the material of the wire constituting the solenoid may be any one of silver (Ag), gold (Au), aluminum (Al), tungsten (W), zinc (Zn), and nickel (Ni), or an alloy including at least one thereof.

The controller 120 may control power supplied to the induction coil 132. The controller 120 may control the first battery 110 to adjust the power supplied to the induction coil 132. For example, the controller 120 may control power supplied to the induction coil 132 such that the heating element 131 maintains a target temperature.

According to an embodiment, the first battery 110 may include an aqueous electrolyte. The aqueous electrolyte may refer to an electrolyte including water as a solvent. The first battery 110 may refer to an electrochemical energy storage device that produces electricity via a chemical reaction.

The most representative energy storage device, i.e., a lithium ion battery, generally includes a cathode, an anode, a separator membrane, and an electrolyte. In the lithium ion battery, lithium ions move from the anode to the cathode during a discharging process, and lithium ions move from the cathode to the anode during a charging process. The separator membrane is arranged between the cathode and the anode, allowing lithium ions to pass therethrough while blocking contact between the cathode and the anode.

The electrolyte is arranged between the cathode and the anode and transports lithium ions to both electrodes. The electrolyte includes a solvent, a salt, and an additive, and generally, an electrolyte of a lithium ion secondary battery includes an organic solvent. Organic solvent electrolytes are flammable and pose a fire risk due to oxygen gas generated during charging and discharging processes.

In contrast, batteries including the aqueous electrolyte have high stability and fast charge and discharge rates. Because the batteries including the aqueous electrolyte include water as an electrolyte solvent, there is no risk of ignition even when a short circuit occurs after a long-term cycle of the batteries, ensuring stable operation.

Because the first battery 110 includes the aqueous electrolyte, the aerosol-generating device 100 according to an embodiment is capable of fast charging and may have an improved service lifespan despite frequent charging and discharging. In addition, the stability of the aerosol-generating device 100, which is susceptible to external impacts, may be improved.

The aqueous electrolyte may include one or more multivalent metal ions selected from the group consisting of Mg²⁺, Ca²⁺, Zn²⁺, and Al³⁺. Multivalent metal ions have an advantage in that a plurality of charges participate in electrochemical reactions.

For example, the first battery 110 may be an aqueous zinc ion battery in which the aqueous electrolyte includes zinc. The aqueous zinc ion battery may have a wide operating voltage and high energy density based on multielectron exchange and high density of zinc.

For example, in the aqueous zinc ion battery, the aqueous electrolyte may include one or more metal salts selected from the group consisting of ZnSO₄, Zn(CF₃SO₃)₂, Zn(NO₃)₂, Zn(ClO₄)₂, ZnCl₂, Zn(CH₃COO)₂, Zn(TFSI)₂, Zn(BF₄)₂·xH₂O, and Zn(N(CF₃SO₂)₂)₂ (Zn(TFSI)₂), but is not limited thereto. The batteries including the aqueous electrolyte may have a gradually decreasing energy density due to a side reaction, i.e., a water decomposition reaction. The metal salts described above may prevent the water decomposition reaction in the aqueous electrolyte, allowing the first battery 110 to provide stable electrochemical performance.

The concentration of metal salt in the aqueous electrolyte may be about 1 M or more. Batteries including the aqueous electrolyte have a chronic problem where dendrites are formed on the surface of an electrode. The dendrites formed on the electrode may fall off the electrode, not only causing loss of function of an electrode active material, but also causing short circuits of the batteries. When the aqueous electrolyte includes a relatively high concentration of metal salt of about 1 M or more, there may be an effect of suppressing dendrite formation. The concentration of metal salt in the aqueous electrolyte may be about 3 M or more, about 5 M or more, about 10 M or more, about 20 M or more, about 30 M or more, or about 50 M or more. In addition, the concentration of metal salt in the aqueous electrolyte may be about 200 M or less, about 100 M or less, about 50 M or less, about 30 M or less, about 20 M or less, about 10 M or less, about 5 M or less, or about 3 M or less.

For example, the aqueous electrolyte may include LiTFSI at a concentration of about 20 M or more. In this case, reduction of water at the anode may be inhibited, thereby suppressing hydrogen generation and inducing a stable insertion/desorption reaction of zinc ions. In another example, the aqueous electrolyte may include ZnCl₂ at a concentration of about 30 M or more. In this case, the aqueous electrolyte may increase an operating voltage range by suppressing formation of electrochemically inactive byproducts.

In addition, the aqueous electrolyte may include a plurality of metal salts. For example, the aqueous electrolyte may include Zn(TFSI)₂ and LiTFSI. The aqueous electrolyte may include a mixture of a Zn(TFSI)₂ aqueous solution of about 1 M or more and a LiTFSI aqueous solution of about 20 M or more. In this case, an unintended hydrogen generation reaction may be suppressed, and a high Coulombic efficiency of 90 % or more may be achieved.

The aqueous electrolyte may include an additive. For example, the aqueous electrolyte may include one or more additives selected from the group consisting of zinc triflate, Na₂SO₄, polyacrylamide (PAM), diethyl ether (Et₂O), and dimethyl sulfoxide (DMSO), but is not limited thereto. The additive may improve the cycle characteristics of the first battery 110 and enable the first battery 110 to have a high energy density.

For example, the aqueous electrolyte may include Na₂SO₄ as the additive, and the concentration of Na₂SO₄ in the aqueous electrolyte may be about 0.1 g/L to about 5 g/L. In another example, the aqueous electrolyte may include Et₂O as the additive, and the concentration of Et₂O in the aqueous electrolyte may be about 1 vol% to about 5 vol%. The additive has an effect of preventing zinc corrosion by either being absorbed onto the surface of an electrode or forming a solid electrolyte interphase (SEI). Accordingly, the first battery 110 may maintain about 95 % or more of its initial capacity after about 1,000 cycles, while exhibiting high charge and discharge rates and cycle characteristics.

The first battery 110 may include a cathode including one or more transition metals selected from manganese and vanadium as cathode active materials. For example, the cathode of the first battery 110 may include MnO₂ or V₂O₅ and/or V₆O₁₃ as cathode active materials, but is not limited thereto.

In addition, the first battery 110 may include an anode including zinc as an anode active material. For example, the anode of the first battery 110 may include zinc, but is not limited thereto.

In another example, the first battery 110 may be an aqueous redox flow battery.

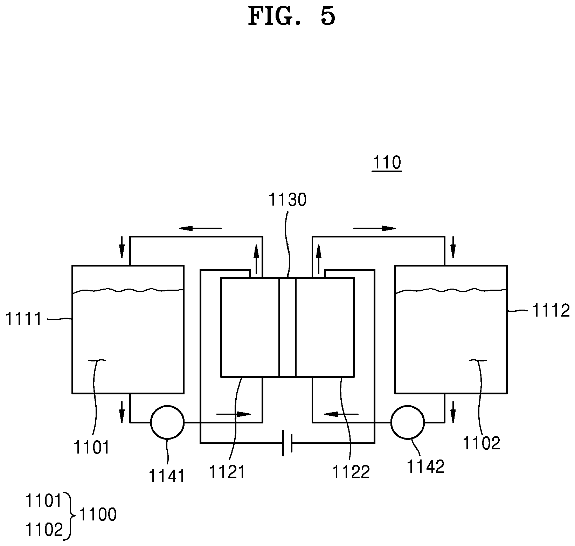

FIG. 5 is a configuration diagram illustrating an example of the first battery 110. Referring to FIG. 5, an aqueous electrolyte 1100 of the first battery 110 may include a cathode electrolyte 1101 and an anode electrolyte 1102. The first battery 110 may include a cathode 1121, an anode 1122, a separator membrane 1130 arranged between the cathode 1121 and the anode 1122, a cathode electrolyte tank 1111 that accommodates the cathode electrolyte 1101, and an anode electrolyte tank 1112 that accommodates the anode electrolyte 1102. The cathode electrolyte 1101 may circulate from the cathode electrolyte tank 1111, via the cathode 1121, back to the cathode electrolyte tank 1111, and the anode electrolyte 1102 may circulate from the anode electrolyte tank 1112, via the anode 1122, back to the anode electrolyte tank 1112.

Energy may be generated due to an oxidation-reduction reaction of active materials included within each of the cathode electrolyte 1101 and the anode electrolyte 1102 respectively supplied to the cathode 1121 and the anode 1122, which occurs between the electrodes. The separator membrane 1130 arranged between the cathode 1121 and the anode 1122 may prevent contact between the cathode 1121 and the anode 1122, but ions of the active materials present in the cathode electrolyte 1101 or the anode electrolyte 1102 may move via the separator membrane 1130.

The cathode electrolyte 1101 may include at least one selected from the group consisting of bromine, iron, nickel, and manganese. The anode electrolyte 1102 may include zinc. For example, the cathode electrolyte 1101 of the first battery 110 includes bromine, and the anode electrolyte 1102 may include zinc.

In addition, the anode 1122 may include a carbon-based material. When the carbon-based material is applied to the anode 1122, dendrite formation on the surface of the electrode may be prevented, and improved lifespan characteristics may be achieved. The anode 1122 may include, for example, one or more carbon-based materials selected from graphene, activated carbon, carbon fibers, carbon nanotubes, and fullerenes, but is not limited thereto.

The first battery 110 may include a cathode pump 1141 that circulates the cathode electrolyte 1101 from the cathode electrolyte tank 1111, via the cathode 1121, back to the cathode electrolyte tank 1111. In addition, the first battery 110 may include an anode pump 1142 that circulates the anode electrolyte 1102 from the anode electrolyte tank 1112, via the anode 1122, back to the anode electrolyte tank 1112. Each of the cathode electrolyte tank 1111 and the anode electrolyte tank 1112 may include an electrolyte inlet and an electrolyte outlet, which are connected to the cathode electrolyte tank 1111 and the anode electrolyte tank 1112, and the cathode electrolyte 1101 and the anode electrolyte 1102 may be circulated by operating the cathode pump 1141 and the anode pump 1142.

The aerosol-generating device 100 according to an embodiment may include a holder and a cradle. The holder may include the heater 130 and the first battery 110. The cradle may include an internal space in which the holder is accommodated and may include a second battery that supplies power to the first battery 110.

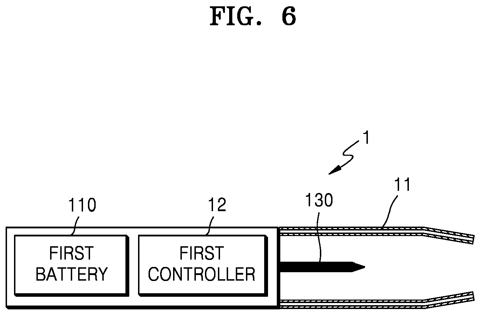

FIG. 6 is a configuration diagram illustrating a holder of an aerosol-generating device according to an embodiment.

Referring to FIG. 6, a holder 1 includes the first battery 110, a first controller 12, and the heater 130. In addition, the holder 1 may include an internal space formed by a case 11. An aerosol-generating article may be inserted into the internal space of the holder 1.

Only components related to the present embodiment are illustrated in the holder 1 shown in FIG. 6. Therefore, it will be understood by those of ordinary skill in the art that, in addition to the components shown in FIG. 6, other general-purpose components may be further included in the holder 1.

When the aerosol-generating article is inserted into the holder 1, the holder 1 heats the heater 130. The temperature of an aerosol-generating material within the aerosol-generating article is increased by the heated heater 130, and thus, an aerosol is generated. The generated aerosol is delivered to a user via a filter of the aerosol-generating article. However, even when the aerosol-generating article is not inserted into the holder 1, the holder 1 may heat the heater 130.

The case may be detached from the holder 1. For example, when a user turns the case 11 clockwise or counterclockwise, the case 11 may be detached from the holder 1.

In addition, the diameter of a hole formed at a distal end of the case 11 may be formed smaller than the diameter of a space formed by the case 11 and the heater 130, thereby serving as a guide for the aerosol-generating article inserted into the holder 1.

The first battery 110 supplies power that is used to operate the holder 1. For example, the first battery 110 may supply power to heat the heater 130 and may supply power that is required to operate the first controller 12. In addition, the first battery 110 may supply power that is required to operate a display, sensor, motor, etc. installed on the holder 1.

The heater 130 is heated by power supplied from the first battery 110. When the aerosol-generating article is inserted into the holder 1, the heated heater 130 may raise the temperature of the aerosol-generating article. The same as described above with reference to FIGS. 1 to 4 may apply to the first battery 110 and the heater 130.

The first controller 12 overall controls the operation of the holder 1. In detail, the first controller 12 controls the operation of not only the first battery 110 and the heater 130 but also other components included in the holder 1. In addition, the first controller 12 may check the status of each of the components of the holder 1 and determine whether the holder 1 is in an operable state.

The first controller 12 includes at least one processor. A processor may be implemented as an array of a plurality of logic gates or may be implemented as a combination of a general-purpose microprocessor and a memory in which a program executable in the microprocessor is stored. In addition, it will be understood by those of ordinary skill in the art that the processor may be implemented in other forms of hardware.

For example, the first controller 12 may control the operation of the heater 130. The first controller 12 may control the amount of power supplied to the heater 130 and the duration of power supply to ensure that the heater 130 is heated to a certain temperature or maintains an appropriate temperature. In addition, the first controller 12 may check the status of the first battery 110 (e.g., the remaining power of the first battery 110) and, as needed, generate a notification alarm.

In addition, the first controller 12 may check whether there is a user's puff and the intensity of the puff, and may check the number of puffs. In addition, the first controller 12 may continuously check the duration for which the holder 1 is operating. In addition, the first controller 12 may check whether a cradle 2 to be described below is coupled with the holder 1, and control the operation of the holder 1 on the basis of coupling or detachment between the cradle 2 and the holder 1.

The holder 1 may further include general-purpose components in addition to the first battery 110, the first controller 12, and the heater 130.

For example, the holder 1 may include a display capable of outputting visual information or a motor for outputting haptic information. For example, when the holder 1 includes a display, the first controller 12 may transmit, to a user via the display, information about the status of the holder 1 (e.g., availability of the holder), information about the heater 130 (e.g., preheating start, preheating in-progress, preheating complete, etc.), information about the first battery 110 (e.g., remaining capacity and availability of the first battery 110), information about a reset of the holder 1 (e.g., reset timing, reset in-progress, reset complete, etc.), information about cleaning of the holder 1 (e.g., cleaning timing, cleaning needed, cleaning in-progress, cleaning complete, etc.), information about charging of the holder 1 (e.g., charging needed, charging in-progress, charging complete, etc.), information about puffs (e.g., the number of puffs and puff end notification), or information about safety (e.g., elapsed usage time). In another example, when the holder 1 includes a motor, the first controller 12 may transmit, to a user, the information described above, by using the motor to generate a vibration signal.

In addition, the holder 1 may include: at least one input device (e.g., button) through which a user may control a function of the holder 1; and/or a terminal coupled with the cradle 2. For example, a user may execute various functions by using an input device of the holder 1. By adjusting the number of times the user presses the input device (e.g., once, twice, etc.) or the duration for which the user presses the input device (e.g., 0.1 seconds, 0.2 seconds, etc.), the user may execute a desired function among a plurality of functions of the holder 1. When the user operates the input device, the holder 1 may perform a function of preheating the heater 130, a function of adjusting the temperature of the heater 130, a function of cleaning a space into which the aerosol-generating article is inserted, a function of inspecting whether the holder 1 is in an operable state, a function of displaying the remaining power (available power) of the first battery 110, a reset function of the holder 1, etc. However, the functions of the holder 1 are not limited to the examples described above.

In addition, the holder 1 may include a puff detection sensor, a temperature detection sensor, and/or an aerosol-generating article insertion detection sensor. For example, the puff detection sensor may be implemented by a general pressure sensor, and the aerosol-generating article insertion detection sensor may be implemented by a general capacitive sensor or a resistance sensor. In addition, the holder 1 may be manufactured to have a structure that allows external air to flow in/out even when the aerosol-generating article is inserted.

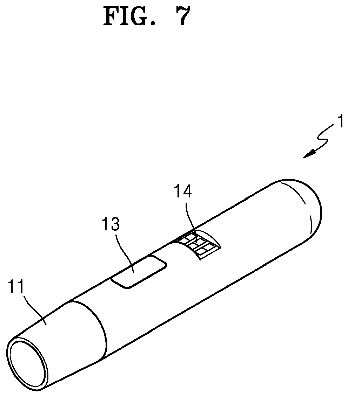

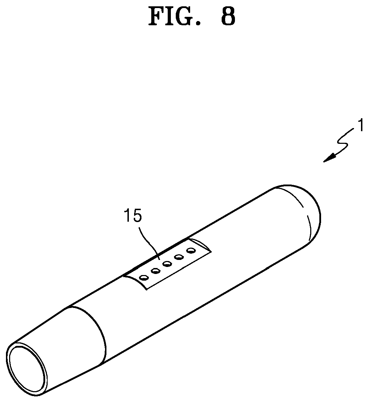

FIGS. 7 and 8 are diagrams illustrating an example of a holder from various aspects.

FIG. 7 is a diagram illustrating an example of the holder 1 viewed in a first direction. As shown in FIG. 7, the holder 1 may be manufactured to have a cylindrical shape, but is not limited thereto. The case 11 of the holder 1 may be detached by a user's action, and an aerosol-generating article may be inserted into a distal end of the case 11. In addition, the holder 1 may include a first button 13 through which a user may control the holder 1, and a first display 14 that outputs an image.

FIG. 8 is a diagram illustrating an example of the holder 1 viewed in a second direction. The holder 1 may include a first terminal 15 coupled with the cradle 2. By coupling the first terminal 15 of the holder 1 with a second terminal 26 of the cradle 2, the first battery 110 of the holder 1 may be charged by power supplied by a second battery 21 of the cradle 2. In addition, via the first terminal 15 and the second terminal 26, the holder 1 may be operated by the power supplied by the second battery 21 of the cradle 2, and communication (signal transmission and reception) is possible between the holder 1 and the cradle 2. For example, the first terminal 15 may include four micro pins, but is not limited thereto.

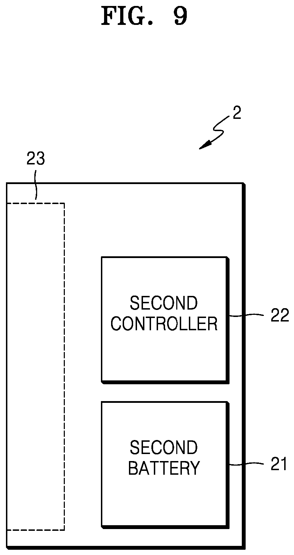

FIG. 9 is a configuration diagram illustrating a cradle of an aerosol-generating device according to an embodiment.

Referring to FIG. 9, the cradle 2 may include the second battery 21 and a second controller 22. In addition, the cradle 2 may include an internal space 23 into which the holder 1 may be inserted. For example, the internal space 23 may be formed on one side of the cradle 2. Therefore, even when the cradle 2 does not include a separate lid, the holder 1 may be inserted into and fixed to the cradle 2.

Only components related to the present embodiment are illustrated in the cradle 2 shown in FIG. 9. Therefore, it will be understood by those of ordinary skill in the art that, in addition to the components shown in FIG. 9, other general-purpose components may be further included in the cradle 2.

The second battery 21 supplies power that is used to operate the cradle 2. In addition, the second battery 21 may supply power to charge the first battery 110 of the holder 1. For example, when the holder 1 is inserted into the cradle 2 and the first terminal 15 of the holder 1 is coupled with the second terminal 260 of the cradle 2, the second battery 21 of the cradle 2 may supply power to the first battery 110 of the holder 1.

In addition, when the holder 1 is coupled with the cradle 2, the second battery 21 may supply power that is used to operate the holder 1. For example, when the first terminal 15 of the holder 1 is coupled with the second terminal 260 of the cradle 2, the holder 1 may operate using the power supplied by the second battery 21 of the cradle 2, regardless of whether the first battery 110 of the holder 1 is discharged.

The second battery 21 may be a lithium ion battery. For example, the second battery 21 may be at least one selected from a lithium iron phosphate (LFP) battery, a lithium cobalt oxide (LCO) battery, a lithium nickel manganese cobalt (NCM) battery, and a lithium nickel cobalt aluminum (NCA) battery, but is not limited thereto.

The first battery 110 of the holder 1 is required to have excellent cycle performance and stability, considering risks of frequency charging and discharging as well as external impacts. However, the first battery 110 may be charged via the cradle 2 during periods except for a relatively short period during which a user uses the holder 1, and thus, the first battery 110 does not require a high energy density.

In contrast, the second battery 21 of the cradle 2 has fewer charge and discharge cycles and is less prone to external impact risks compared to the first battery 110, but is required to have a high energy density to repeatedly charge the first battery 110. Accordingly, an aqueous electrolyte-containing battery with excellent cycle performance and stability may be applied as the first battery 110 of the holder 1, and a lithium ion battery with a high energy density may be applied as the second battery 21 of the cradle 2, to thereby solve the problems described above.

The second controller 22 overall controls the operation of the cradle 2. The second controller 22 may control the operation of all components of the cradle 2. In addition, the second controller 22 may determine whether the holder 1 is coupled with the cradle 2, and control the operation of the cradle 2 on the basis of coupling or detachment between the cradle 2 and the holder 1.

For example, when the holder 1 is coupled with the cradle 2, the second controller 22 may charge the first battery 110 or heat the heater 130 by supplying power from the second battery 21 to the holder 1. Therefore, even when the remaining power of the first battery 110 is small, a user may smoke continuously by coupling the holder 1 with the cradle 2.

The second controller 22 includes at least one processor. A processor may be implemented as an array of a plurality of logic gates or may be implemented as a combination of a general-purpose microprocessor and a memory in which a program executable in the microprocessor is stored. In addition, it will be understood by those of ordinary skill in the art that the processor may be implemented in other forms of hardware.

The cradle 2 may further include general-purpose components in addition to the second battery 21 and the second controller 22. For example, the cradle 2 may include a display capable of outputting visual information. For example, when the cradle 2 includes a display, the second controller 22 may transmit, to a user by generating a signal to be displayed on the display, information about the second battery 21 (e.g., remaining capacity and availability of the second battery 21), information about a reset of the cradle 2 (e.g., reset timing, reset in-progress, reset complete, etc.), information about cleaning of the holder 1 (e.g., cleaning timing, cleaning needed, cleaning in-progress, cleaning complete, etc.), information about charging of the cradle 2 (e.g., charging needed, charging in-progress, charging complete, etc.), etc.

In addition, the cradle 2 may include: at least one input device (e.g., button) through which a user may control a function of the cradle 2; the second terminal 26 coupled with the holder 1; and/or an interface (e.g., USB port) for charging the second battery 21.

For example, a user may execute various functions by using an input device of the cradle 2. By adjusting the number of times the user presses the input device or the duration for which the user presses the input device, the user may execute a desired function among a plurality of functions of the cradle 2. When the user operates the input device, the cradle 2 may perform a function of preheating the heater 130 of the holder 1, a function of adjusting the temperature of the heater 130 of the holder 1, a function of cleaning a space into which an aerosol-generating article is inserted within the holder 1, a function of inspecting whether the cradle 2 is in an operable state, a function of displaying the remaining power (available power) of the second battery 21 of the cradle 2, a reset function of the cradle 2, etc. However, the functions of the cradle 2 are not limited to the examples described above.

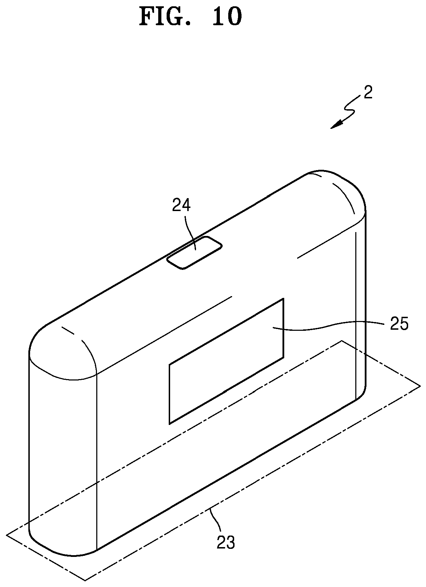

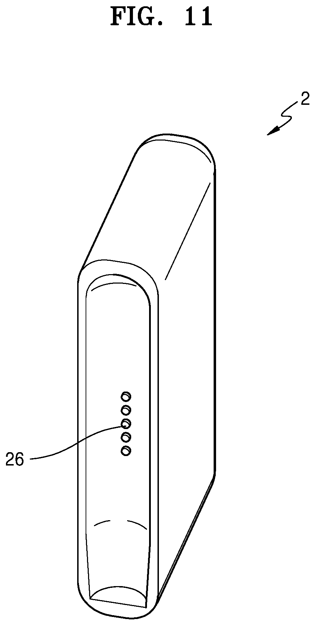

FIGS. 10 and 11 are diagrams illustrating an example of a cradle from various aspects.

FIG. 10 is a diagram illustrating an example of the cradle 2 viewed in the first direction. The internal space 23, into which the holder 1 may be inserted, is arranged on one side of the cradle 2. In addition, even when the cradle 2 does not include a separate fixing means such as a lid, the holder 1 may be inserted into and fixed to the cradle 2. In addition, the cradle 2 may include: a second button 24 through which a user may control the cradle 2; and a second display 25 that outputs an image.

FIG. 11 is a diagram illustrating an example of the cradle 2 viewed in the second direction. The cradle 2 may include the second terminal 26 coupled with the inserted holder 1. By coupling the second terminal 26 with the first terminal 15 of the holder 1, the first battery 110 of the holder 1 may be charged by power supplied by the second battery 21 of the cradle 2. In addition, via the first terminal 15 and the second terminal 26, the holder 1 may be operated by the power supplied by the second battery 21 of the cradle 2, and signal transmission and reception between the holder 1 and the cradle 2 is possible. For example, the second terminal 26 may include four micro pins, but is not limited thereto.

As described above, the holder 1 may be inserted into the internal space 23 of the cradle 2. In addition, the holder 1 may be fully inserted into the cradle 2, or may be tilted while being inserted into the cradle 2.

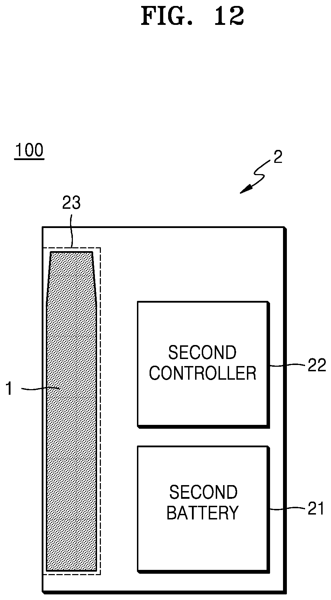

FIG. 12 is a diagram illustrating an example in which a holder is inserted into a cradle.

Referring to FIG. 12, an example in which the holder 1 is inserted into the cradle 2 is illustrated. Because the internal space 23 into which the holder 1 is to be inserted is present on one side of the cradle 2, the inserted holder 1 may not be exposed to the outside by other side surfaces of the cradle 2. Therefore, the cradle 2 may not include other components (e.g., a lid) to prevent the holder 1 from being exposed to the outside.

The cradle 2 may include at least one coupling member to increase the strength of coupling with the holder 1. In addition, the holder 1 may include at least one coupling member. Herein, a coupling member may be a magnet, but is not limited thereto.

Because each of the holder 1 and the cradle 2 includes the coupling member, even when the holder 1 is inserted into one side of the cradle 2, the holder 1 and the cradle 2 may be more strongly coupled with each other. Therefore, even when the cradle 2 does not include a separate component (e.g., a lid), the inserted holder 1 may not be easily detached from the cradle 2.

In addition, when it is determined that the holder 1 is fully inserted into the cradle 2 by the terminals 15 and 26 and/or the coupling members, the second controller 22 may charge the first battery 110 of the holder 1 by using power of the second battery 21.

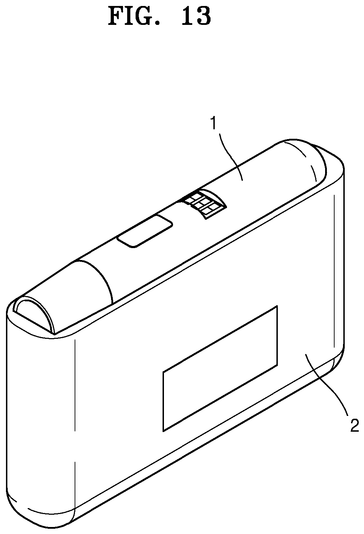

FIG. 13 is a diagram illustrating an example in which a holder is inserted into a cradle.

FIG. 13 illustrates an example in which the holder 1 is fully inserted into the cradle 2. When the holder 1 is fully inserted into the cradle 2, the cradle 2 may be manufactured to be sufficiently secure the internal space 23 in order to minimize a user's contact with the holder 1. When the holder 1 is fully inserted into the cradle 2, the second controller 22 supplies power from the second battery 21 to the holder 1 to charge the first battery 110 of the holder 1.

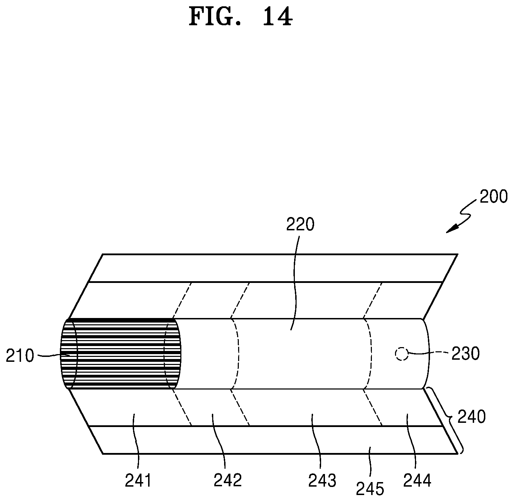

Hereinafter, examples of an aerosol-generating article are described with reference to FIGS. 14 to 16.

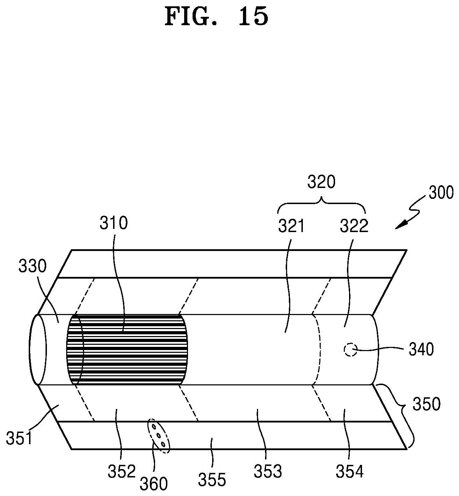

Figs. 14 and 15 illustrate examples of the aerosol generating article.

Referring to FIG. 14, the aerosol generating article 200 may include a tobacco rod 210 and a filter rod 220.

FIG. 14 illustrates that the filter rod 220 includes a single segment. However, the filter rod 220 is not limited thereto. In other words, the filter rod 220 may include a plurality of segments. For example, the filter rod 220 may include a first segment configured to cool an aerosol and a second segment configured to filter a certain component included in the aerosol. Also, as necessary, the filter rod 220 may further include at least one segment configured to perform other functions.

The aerosol generating article 200 may be packaged using at least one wrapper 240. The wrapper 240 may have at least one hole through which external air may be introduced or internal air may be discharged. For example, the aerosol generating article 200 may be packaged by one wrapper 240. As another example, the aerosol generating article 200 may be doubly packaged by two or more wrappers 240. For example, the tobacco rod 210 may be packaged by a first wrapper 241, and the filter rod 220 may be packaged by wrappers 242, 243, 244. Also, the entire aerosol generating article 200 may be re-packaged by another single wrapper 245. When the filter rod 220 includes a plurality of segments, each segment may be packaged by wrappers 242, 243, 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected to the tobacco rod 210.

The tobacco rod 210 may be manufactured in various forms. For example, the tobacco rod 210 may be formed as a sheet or a strand. Also, the tobacco rod 210 may be formed as a pipe tobacco, which is formed of tiny bits cut from a tobacco sheet. Also, the tobacco rod 210 may be surrounded by a heat conductive material. For example, the heat conductive material may be, but is not limited to, a metal foil such as aluminum foil. For example, the heat conductive material surrounding the tobacco rod 210 may uniformly distribute heat transmitted to the tobacco rod 210, and thus, the heat conductivity applied to the tobacco rod may be increased and taste of the tobacco may be improved. Also, the heat conductive material surrounding the tobacco rod 210 may function as a susceptor heated by the induction heater. Here, although not illustrated in the drawings, the tobacco rod 210 may further include an additional susceptor, in addition to the heat conductive material surrounding the tobacco rod 210.

The filter rod 220 may include a cellulose acetate filter. Shapes of the filter rod 220 are not limited. For example, the filter rod 220 may include a cylinder-type rod or a tube-type rod having a hollow inside. Also, the filter rod 220 may include a recess-type rod. When the filter rod 220 includes a plurality of segments, at least one of the plurality of segments may have a different shape.

The filter rod 220 may be formed to generate flavors. For example, a flavoring liquid may be injected onto the filter rod 220, or an additional fiber coated with a flavoring liquid may be inserted into the filter rod 220.

Also, the filter rod 220 may include at least one capsule 230. Here, the capsule 230 may generate a flavor or an aerosol. For example, the capsule 230 may have a configuration in which a liquid containing a flavoring material is wrapped with a film. For example, the capsule 230 may have a spherical or cylindrical shape, but is not limited thereto.

When the filter rod 220 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

Referring to FIG. 15, the aerosol generating article 300 may further include a front-end plug 330. The front-end plug 330 may be located on one side of the tobacco rod 310 which is opposite to the filter rod 320. The front-end plug 330 may prevent the tobacco rod 310 from being detached outwards and prevent the liquefied aerosol from flowing from the tobacco rod 310 into the aerosol generating device, during smoking.

The filter rod 320 may include a first segment 321 and a second segment 322. Here, the first segment 321 may correspond to the first segment of the filter rod 220 of FIG. 14, and the second segment 322 may correspond to the second segment of the filter rod 220 of FIG. 14.

A diameter and a total length of the aerosol generating article 300 may correspond to a diameter and a total length of the aerosol generating article 200 of FIG. 14. For example, the length of the front-end plug 330 is about 7 mm, the length of the tobacco rod 310 is about 15 mm, the length of the first segment 321 is about 12 mm, and the length of the second segment 322 is about 14 mm, but it is not limited thereto.

The aerosol generating article 300 may be packaged using at least one wrapper 350. The wrapper 350 may have at least one hole through which external air may be introduced or internal air may be discharged. For example, the front-end plug 330 may be packaged by a first wrapper 351, the tobacco rod 310 may be packaged by a second wrapper 352, the first segment 321 may be packaged by a third wrapper 353, and the second segment 322 may be packaged by a fourth wrapper 354. Further, the entire aerosol generating article 300 may be repackaged by a fifth wrapper 355.

In addition, at least one perforation 360 may be formed in the fifth wrapper 355. For example, the perforation 360 may be formed in a region surrounding the tobacco rod 310, but is not limited thereto. The perforation 360 may serve to transfer heat generated by the heater 130 illustrated in FIGS. 2 and 3 to the inside of the tobacco rod 310.

In addition, at least one capsule 340 may be included in the second segment 322. Here, the capsule 340 may generate a flavor or an aerosol. For example, the capsule 340 may have a configuration in which a liquid containing a flavoring material is wrapped with a film. For example, the capsule 340 may have a spherical or cylindrical shape, but is not limited thereto.

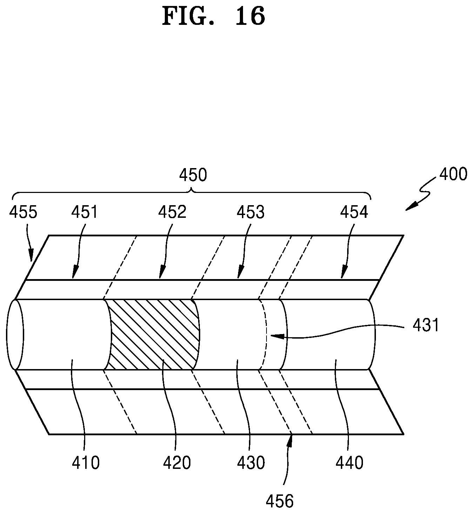

FIG. 16 is a diagram illustrating another example of an aerosol-generating article.

Referring to FIG. 16, an aerosol-generating article 400 may include a first aerosol-generating rod 410, a second aerosol-generating rod 420, a cooling rod 430, and a filter rod 440. In addition, the aerosol-generating article 400 may be wrapped by at least one wrapper 450.

The first aerosol-generating rod 410, the second aerosol-generating rod 420, the cooling rod 430, and the filter rod 440 may be aligned in order in a longitudinal direction of the aerosol-generating article 400. Here, the longitudinal direction of the aerosol-generating article 400 may be a direction in which the length of the aerosol-generating article 400 extends. For example, the longitudinal direction of the aerosol-generating article 400 may be a direction from the first aerosol-generating rod 410 toward the filter rod 440.

Aerosols generated by the first aerosol-generating rod 410 and the second aerosol-generating rod 420 may pass through the first aerosol-generating rod 410, the second aerosol-generating rod 420, the cooling rod 430, and the filter rod 440 in this order, and accordingly, a smoker may inhale the aerosols from the filter rod 440.

The first aerosol-generating rod 410 may be heated to generate an aerosol. The first aerosol-generating rod 410 may include an aerosol-generating material. In addition, the first aerosol-generating rod 410 may contain other additives, such as a humectant and/or organic acid, and may contain a flavoring liquid such as menthol. For example, the aerosol-generating material may include at least one of glycerin, propylene glycol, ethylene glycol, dipropylene glycol, diethylene glycol, triethylene glycol, tetraethylene glycol, and oleyl alcohol.

The first aerosol-generating rod 410 may include an aerosol-generating substrate impregnated with an aerosol-generating material. The aerosol-generating substrate may include a crimped sheet, and the liquid aerosol-generating material may be included in the first aerosol-generating rod 410 in a state of being impregnated in the crimped sheet. In addition, other additives, such as a flavoring agent, a humectant, and/or organic acid, and a flavoring liquid may be included in the first aerosol-generating rod 410 in a state of being absorbed in the crimped sheet.

The aerosol-generating substrate may be arranged inside the first aerosol-generating rod 410 in a wound state. The wound aerosol-generating substrate may be wound around an axis extending in the longitudinal direction of the aerosol-generating article 400, but is not limited thereto.

The crimped sheet may be a sheet formed of a polymer material. For example, the polymer material may include at least one of paper, cellulose acetate, lyocell, and polylactic acid. For example, the crimped sheet may be a paper sheet that does not generate an off-flavor due to heat even when heated to a high temperature.

The first aerosol-generating rod 410 may extend from a distal end of the aerosol-generating article 400 to a point about 7 mm to about 20 mm away, and the second aerosol-generating rod 420 may extend from the end point of the first aerosol-generating rod 410 to another point about 7 mm to about 20 mm away. However, such a numerical range is not necessarily limited thereto, and the length to which each of the first aerosol-generating rod 410 and the second aerosol-generating rod 420 extends may be appropriately adjusted within a range that may be easily changed by those of ordinary skill in the art.

The second aerosol-generating rod 420 may be heated to generate an aerosol including nicotine. For example, the second aerosol-generating rod 420 may include a tobacco material. The tobacco material may be in the form of a tobacco strand, a tobacco particle, a tobacco sheet, a tobacco bead, a tobacco granule, a tobacco powder, or tobacco extract, but is not limited thereto.

For example, the second aerosol-generating rod 420 may include a plurality of tobacco strands, and the plurality of tobacco strands may include cut tobacco sheets. The cut tobacco sheets may be obtained by cutting tobacco sheets. The cut tobacco sheets may be made by the following process. Tobacco raw materials are pulverized to make a slurry in which an aerosol-generating material (e.g., glycerin, propylene glycol, etc.), a flavoring liquid, a binder (e.g., guar gum, xanthan gum, carboxymethyl cellulose, etc.), water, etc. are mixed. The slurry may include natural pulp or cellulose, and one or more binders may be mixed to be used as the slurry. The slurry may be cast to form a sheet and then dried to make a tobacco sheet. The tobacco sheet may be cut or shredded to make a cut tobacco sheet. The tobacco raw material may be tobacco leaves, tobacco stems, and/or tobacco fines generated during tobacco processing. In addition, other additives, such as wood cellulose fibers, may also be included in the tobacco sheet.

In addition, the second aerosol-generating rod 420 may include tobacco cut sheets made by mixing and processing various types of tobacco leaves, and then cutting the tobacco leaves. In addition, the second aerosol-generating rod 420 may include a mixture of cut tobacco sheets and tobacco cut sheets.

In another example, the second aerosol-generating rod 420 may include a plurality of tobacco granules. The tobacco granules may be particles each having a diameter of about 100 µm to about 2,000 µm. The tobacco granules may be manufactured by extruding a mixture of tobacco leaf powder, a pH adjuster, and a solvent.

The plurality of tobacco granules may be arranged between filter materials. The filter materials may each include, for example, a fiber bundle of cellulose acetate fiber strands. The plurality of tobacco granules may be arranged in a uniformly dispersed form between a plurality of cellulose fibers. In another example, the filter materials may each include a crimped paper sheet. The crimped paper sheet may be arranged inside the second aerosol-generating rod 420 in a wound state. The crimped paper sheet may be wound around an axis extending in the longitudinal direction of the aerosol-generating article 400. The plurality of tobacco granules may be dispersed inside the wound paper sheet.

In addition, the second aerosol-generating rod 420 may include an aerosol-generating substrate impregnated with a liquid aerosol-generating composition. The aerosol-generating substrate may include a crimped sheet, and the liquid aerosol-generating composition may be included in the second aerosol-generating rod 420 in a state of being impregnated in the crimped sheet. The same as described above in connection with the aerosol-generating substrate included in the first aerosol-generating rod 410 may also apply to the aerosol-generating substrate included in the second aerosol-generating rod 420.
the liquid aerosol-generating composition may include nicotine. The nicotine may include freebase nicotine and/or nicotine salt. The freebase nicotine may refer to neutral nicotine that has not been protonated. For example, when a strong base, such as ammonia, is added to a positively charged nicotine salt, the strong base is converted into a cation, and the nicotine salt may become freebase nicotine, which is in a neutral state.

In addition, the liquid aerosol-generating composition may include an aerosol-generating material. The same as described above in connection with the aerosol-generating substrate included in the first aerosol-generating rod 410 may also apply to the aerosol-generating material.

The liquid aerosol-generating composition may be impregnated into the aerosol-generating substrate in an amount of about 0.05 g to about 1.0 g per 1 g of the aerosol-generating substrate. For example, the liquid aerosol-generating composition may be impregnated into the aerosol-generating substrate in an amount of about 0.1 g to about 0.8 g per 1 g of the aerosol-generating substrate.

The cooling rod 430 may cool aerosols generated by the first aerosol-generating rod 410 and the second aerosol-generating rod 420. The cooling rod 430 may be made of a biodegradable polymer material and may have a cooling function. For example, the cooling rod 430 may be made of polylactic acid (PLA) fibers, but is not limited thereto.

Alternatively, the cooling rod 430 may be made of a cellulose acetate filter. However, the cooling rod 430 is not limited to the examples described above, and may include any material that performs an aerosol cooling function. For example, the cooling rod 430 may be a hollow tubular filter or a paper tube.

At least one hole 431 may be formed in an outer surface of the cooling rod 430. The at least one hole 431 may be formed in a circumferential direction of the cooling rod 430 to form one or more rows. The at least one hole 431 may allow external air to be introduced into the cooling rod 430. The external air introduced into the cooling rod 430 may be mixed with high-temperature aerosols generated by the first aerosol-generating rod 410 and the second aerosol-generating rod 420, thereby cooling the aerosols.

The filter rod 440 may filter some components included in an aerosol that passes through the filter rod 440. The filter rod 440 may include a filter material. For example, the filter rod 440 may be a cellulose acetate filter. The filter rod 440 may be manufactured by adding a plasticizer (e.g., triacetin) to cellulose acetate tow.

There is no limitation on the shape of the filter rod 440. For example, the filter rod 440 may be a cylindrical rod or a hollow tubular rod. Alternatively, the filter rod 440 may be a hollow rod with an open distal end. When the filter rod 440 includes a plurality of segments, at least one of the plurality of segments may have a different shape.

The filter rod 440 may be manufactured to generate flavors. For example, a flavoring liquid may be included in the filter rod 440, or a separate fiber including a flavoring liquid may be inserted into the filter rod 440.

In addition, at least one capsule may be included in the filter rod 440. Here, a capsule may generate a flavor or an aerosol. For example, the capsule may have a structure in which a flavoring material-containing liquid is wrapped with a film. The capsule may have a spherical or cylindrical shape, but is not limited thereto.

The aerosol-generating article 400 may include a wrapper 450 surrounding at least some of the first aerosol-generating rod 410 to the filter rod 440. In addition, the aerosol-generating article 400 may include the wrapper 450 surrounding all of the first aerosol-generating rod 410 to the filter rod 440. The wrapper 450 may be arranged at the outermost part of the aerosol-generating article 400, and the wrapper 450 may be a single wrapper but may also be a combination of a plurality of wrappers.

The aerosol-generating article 400 may be wrapped overlappingly by two or more wrappers. For example, the first aerosol-generating rod 410 may be wrapped by a first wrapper 451, the second aerosol-generating rod 420 may be wrapped by a second wrapper 452, the cooling rod 430 may be wrapped by a third wrapper 453, and the filter rod 440 may be wrapped by a fourth wrapper 454. In addition, the aerosol-generating article 400 may be entirely rewrapped by a fifth wrapper 455.

The first wrapper 451may surround the first aerosol-generating rod 410, and the second wrapper 452 may surround the second aerosol-generating rod 420. The first wrapper 451 and the second wrapper 452 may each be a combination of paper and metal foil, such as aluminum foil. For example, the first wrapper 451 and the second wrapper 452 may each be a stacked sheet in which paper and metal foil are stacked. The first wrapper 451 and the second wrapper 452 may each be a stacked sheet in which the paper is arranged on one side of the metal foil, or may each be a stacked sheet in which the paper is arranged on both sides of the metal foil.

The paper of the first wrapper 451 may include an oil-resistant material. For example, the paper of the first wrapper 451 may include polyvinyl alcohol (PVOH) or silicone. The paper of the first wrapper 451 may have a surface coated with polyvinyl alcohol or silicone.

The third wrapper 453 may surround the cooling rod 430. The third wrapper 453 may include a paper roll. The paper roll of the third wrapper 453 may be a porous roll or a non-porous roll. At least one perforation 256 may be formed in the third wrapper 453. For example, the third wrapper 453 may wrap the cooling rod 430 having the at least one hole 431 formed therein, and the at least one perforation 256 formed in the third wrapper 453 may be formed at a position corresponding to the at least one hole 431 formed in the cooling rod 430.

The fourth wrapper 454 may surround the filter rod 440. The fourth wrapper 454 may include a hard roll having a greater thickness and basis weight than a general paper roll. For example, the hard roll may have a thickness of about 70 µm to about 150 µm and a basis weight of about 50 g/m² to about 100 g/m². In addition, the hard roll may include an oil-resistant material. For example, the hard roll may include a surface processed with an oil-resistant material, such as polyvinyl alcohol or silicone.

The fifth wrapper 455 may collectively surround the first aerosol-generating rod 410 wrapped by the first wrapper 451, the second aerosol-generating rod 420 wrapped by the second wrapper 452, the cooling rod 430 wrapped by the third wrapper 453, and the filter rod 440 wrapped by the fourth wrapper 454. The fifth wrapper 455 may prevent an exterior of the aerosol-generating article 400 from being contaminated by an aerosol generated by the aerosol-generating article 400. Liquid materials may be generated inside the aerosol-generating article 400 by a user's puff. For example, as an aerosol generated by the aerosol-generating article 400 is cooled by external air, liquid materials (e.g., moisture) may be generated. As the fifth wrapper 455 wraps an outer surface of the aerosol-generating article 400, the generated liquid materials may be prevented from leaking out of the aerosol-generating article 400.

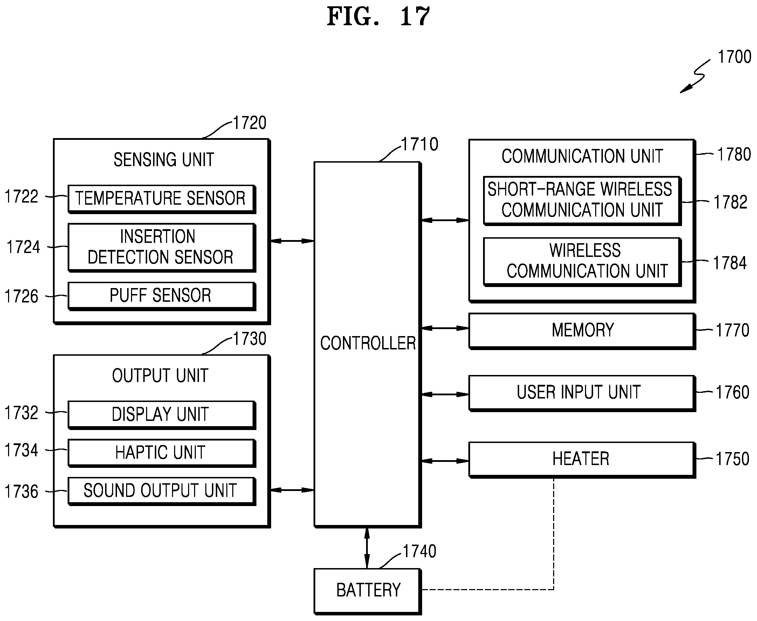

FIG. 17 is a block diagram of an aerosol generating device 1700 according to another embodiment.

The aerosol generating device 1700 may include a controller 1710, a sensing unit 1720, an output unit 1730, a battery 1740, a heater 1750, a user input unit 1760, a memory 1770, and a communication unit 1780. However, the internal structure of the aerosol generating device 1700 is not limited to those illustrated in FIG. 17. That is, according to the design of the aerosol generating device 1700, it will be understood by one of ordinary skill in the art that some of the components shown in FIG. 17 may be omitted or new components may be added.

The sensing unit 1720 may sense a state of the aerosol generating device 1700 and a state around the aerosol generating device 1700, and transmit sensed information to the controller 1710. Based on the sensed information, the controller 1710 may control the aerosol generating device 1700 to perform various functions, such as controlling an operation of the heater 1750, limiting smoking, determining whether an aerosol generating article (e.g., a cigarette, a cartridge, or the like) is inserted, displaying a notification, or the like.

The sensing unit 1720 may include at least one of a temperature sensor 1722, an insertion detection sensor, and a puff sensor 1726, but is not limited thereto.

The temperature sensor 1722 may sense a temperature at which the heater 1750 (or an aerosol generating material) is heated. The aerosol generating device 1700 may include a separate temperature sensor for sensing the temperature of the heater 1750, or the heater 1750 may serve as a temperature sensor. Alternatively, the temperature sensor 1722 may also be arranged around the battery 1740 to monitor the temperature of the battery 1740.

The insertion detection sensor 1724 may sense insertion and/or removal of an aerosol generating article. For example, the insertion detection sensor 1724 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 1726 may sense a user's puff on the basis of various physical changes in an airflow passage or an airflow channel. For example, the puff sensor 1726 may sense a user's puff on the basis of any one of a temperature change, a flow change, a voltage change, and a pressure change.

The sensing unit 1720 may include, in addition to the temperature sensor 1722, the insertion detection sensor 1724, and the puff sensor 1726 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 1730 may output information on a state of the aerosol generating device 1700 and provide the information to a user. The output unit 1730 may include at least one of a display unit 1732, a haptic unit 1734, and a sound output unit 1736, but is not limited thereto. When the display unit 1732 and a touch pad form a layered structure to form a touch screen, the display unit 1732 may also be used as an input device in addition to an output device.

The display unit 1732 may visually provide information about the aerosol generating device 1700 to the user. For example, information about the aerosol generating device 1700 may mean various pieces of information, such as a charging/discharging state of the battery 1740 of the aerosol generating device 1700, a preheating state of the heater 1750, an insertion/removal state of an aerosol generating article, or a state in which the use of the aerosol generating device 1700 is restricted (e.g., sensing of an abnormal object), or the like, and the display unit 1732 may output the information to the outside. The display unit 1732 may be, for example, a liquid crystal display panel (LCD), an organic light-emitting diode (OLED) display panel, or the like. In addition, the display unit 1732 may be in the form of a light-emitting diode (LED) light-emitting device.

The haptic unit 1734 may tactilely provide information about the aerosol generating device 1700 to the user by converting an electrical signal into a mechanical stimulus or an electrical stimulus. For example, the haptic unit 1734 may include a motor, a piezoelectric element, or an electrical stimulation device.

The sound output unit 1736 may audibly provide information about the aerosol generating device 1700 to the user. For example, the sound output unit 1736 may convert an electrical signal into a sound signal and output the same to the outside.

The battery 1740 may supply power used to operate the aerosol generating device 1700. The battery 1740 may supply power such that the heater 1750 may be heated. In addition, the battery 1740 may supply power required for operations of other components (e.g., the sensing unit 1720, the output unit 1730, the user input unit 1760, the memory 1770, and the communication unit 1780) in the aerosol generating device 1700. The battery 1740 may be a rechargeable battery or a disposable battery. For example, the battery 1740 may be a lithium polymer (LiPoly) battery, but is not limited thereto.

The heater 1750 may receive power from the battery 1740 to heat an aerosol generating material. Although not illustrated in FIG. 17, the aerosol generating device 1700 may further include a power conversion circuit (e.g., a direct current (DC)/DC converter) that converts power of the battery 1740 and supplies the same to the heater 1750. In addition, when the aerosol generating device 1700 generates aerosols in an induction heating method, the aerosol generating device 1700 may further include a DC/alternating current (AC) converter that converts DC power of the battery 1740 into AC power.

The controller 1710, the sensing unit 1720, the output unit 1730, the user input unit 1760, the memory 1770, and the communication unit 1780 may each receive power from the battery 1740 to perform a function. Although not illustrated in FIG. 17, the aerosol generating device 1700 may further include a power conversion circuit that converts power of the battery 1740 to supply the power to respective components, for example, a low dropout (LDO) circuit, or a voltage regulator circuit.

In an embodiment, the heater 1750 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 1750 may be implemented by a metal wire, a metal plate on which an electrically conductive track is arranged, a ceramic heating element, or the like, but is not limited thereto.

In another embodiment, the heater 1750 may be a heater of an induction heating type. For example, the heater 1750 may include a susceptor that heats an aerosol generating material by generating heat through a magnetic field applied by a coil.

The user input unit 1760 may receive information input from the user or may output information to the user. For example, the user input unit 1760 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 17, the aerosol generating device 1700 may further include a connection interface, such as a universal serial bus (USB) interface, and may connect to other external devices through the connection interface, such as the USB interface, to transmit and receive information, or to charge the battery 1740.

The memory 1770 is a hardware component that stores various types of data processed in the aerosol generating device 1700, and may store data processed and data to be processed by the controller 1710. The memory 1770 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 1770 may store an operation time of the aerosol generating device 1700, the maximum number of puffs, the current number of puffs, at least one temperature profile, data on a user's smoking pattern, etc.

The communication unit 1780 may include at least one component for communication with another electronic device. For example, the communication unit 1780 may include a short-range wireless communication unit 1782 and a wireless communication unit 1784.

The short-range wireless communication unit 1782 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 1784 may include a cellular network communication unit, an Internet communication unit, a computer network (e.g., local area network (LAN) or wide area network (WAN)) communication unit, or the like, but is not limited thereto. The wireless communication unit 1784 may also identify and authenticate the aerosol generating device 1700 within a communication network by using subscriber information (e.g., International Mobile Subscriber Identifier (IMSI)).

The controller 1710 may control general operations of the aerosol generating device 1700. In an embodiment, the controller 1710 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 1710 may control the temperature of the heater 1750 by controlling supply of power of the battery 1740 to the heater 1750. For example, the controller 1710 may control power supply by controlling switching of a switching element between the battery 1740 and the heater 1750. In another example, a direct heating circuit may also control power supply to the heater 1750 according to a control command of the controller 1710.

The controller 1710 may analyze a result sensed by the sensing unit 1720 and control subsequent processes to be performed. For example, the controller 1710 may control power supplied to the heater 1750 to start or end an operation of the heater 1750 on the basis of a result sensed by the sensing unit 1720. As another example, the controller 1710 may control, based on a result sensed by the sensing unit 1720, an amount of power supplied to the heater 1750 and the time the power is supplied, such that the heater 1750 may be heated to a certain temperature or maintained at an appropriate temperature.

The controller 1710 may control the output unit 1730 on the basis of a result sensed by the sensing unit 1720. For example, when the number of puffs counted through the puff sensor 1726 reaches a preset number, the controller 1710 may notify the user that the aerosol generating device 1700 will soon be terminated through at least one of the display unit 1732, the haptic unit 1734, and the sound output unit 1736.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

## Claims

1. An aerosol-generating device comprising:
a heater configured to heat an aerosol-generating article to generate an aerosol; and
a first battery configured to supply power to the heater,
wherein the first battery comprises an aqueous electrolyte.

2. The aerosol-generating device of claim 1, further comprising:
a holder comprising the heater and the first battery; and
a cradle comprising an internal space in which the holder is accommodated and comprising a second battery configured to charge the first battery by supplying power to the first battery.

3. The aerosol-generating device of claim 2, wherein
the second battery is a lithium ion battery.

4. The aerosol-generating device of claim 1, wherein
the aqueous electrolyte comprises one or more multivalent metal ions selected from the group consisting of Mg²⁺, Ca²⁺, Zn²⁺, and Al³⁺.

5. The aerosol-generating device of claim 1, wherein
the aqueous electrolyte comprises one or more metal salts selected from the group consisting of ZnSO₄, Zn(CF₃SO₃)₂, Zn(NO₃)₂, Zn(ClO₄)₂, ZnCl₂, Zn(CH₃COO)₂, Zn(TFSI)₂, Zn(BF₄)₂·xH₂O, and Zn(N(CF₃SO₂)₂)₂ (Zn(TFSI)₂).

6. The aerosol-generating device of claim 1, wherein
the aqueous electrolyte comprises a metal salt, and a concentration of the metal salt in the aqueous electrolyte is 1 M or more.

7. The aerosol-generating device of claim 1, wherein
the aqueous electrolyte comprises one or more additives selected from the group consisting of zinc triflate, Na₂SO₄, polyacrylamide (PAM), diethyl ether (Et₂O), and dimethyl sulfoxide (DMSO).

8. The aerosol-generating device of claim 1, wherein
the first battery comprises a cathode comprising one or more transition metals selected from manganese and vanadium as a cathode active material and an anode comprising zinc as an anode active material.

9. The aerosol-generating device of claim 1, wherein
the aqueous electrolyte comprises a cathode electrolyte and an anode electrolyte,
the first battery comprises a cathode, an anode, and a separator membrane arranged between the cathode and the anode,
the cathode electrolyte circulates from a cathode electrolyte tank that accommodates the cathode electrolyte, via the cathode, back to the cathode electrolyte tank, and
the anode electrolyte circulates from an anode electrolyte tank that accommodates the anode electrolyte, via the anode, back to the anode electrolyte tank.

10. The aerosol-generating device of claim 9, wherein
the cathode electrolyte comprises bromine, and the anode electrolyte comprises zinc.

11. The aerosol-generating device of claim 9, wherein
the first battery further comprises a cathode pump configured to circulate the cathode electrolyte from the cathode electrolyte tank, via the cathode, back to the cathode electrolyte tank, and
an anode pump configured to circulate the anode electrolyte from the anode electrolyte tank, via the anode, back to the anode electrolyte tank.
